# EUROPEAN PATENT SPECIFICATION

(11) **EP 2 380 771 B1**
(45) Date of publication and mention of the grant of the patent: **19.09.2012**
(21) Application number: 11162388.0
(22) Date of filing: 14.04.2011
(51) Int. Cl.: B60P 3/39, A47C 17/80

(54) **Locking device in a lifting apparatus with belts, in particular for beds of leisure vehicles**
Sperrvorrichtung in einer Hebevorrichtung mit Riemen, insbesondere für Betten oder Freizeitfahrzeuge
Dispositif de verrouillage dans un appareil de levage doté de ceintures, en particulier pour des lits de véhicules de loisirs

(30) Priority: 22.04.2010 IT PI20100050
(43) Date of publication of application: 26.10.2011
(73) Proprietor: ST.LA.Srl, 56025 Pontedera (PI) (IT)
(72) Inventor: Zappolini, Stefano, 56020 Montopoli V.A. (PI) (IT)
(74) Representative: Leotta, Antonio

(56) References cited:
- WO-A1-2010/092607
- US-A- 1 063 906
- US-A- 5 984 404
- US-B1- 6 592 163

## Description

### Technical Field

the present invention concerns a locking device in a lifting apparatus with belts of the type mainly used in leisure vehicles such as campers, caravans, yachts or other leisure boats for lifting beds, tables or other furniture between a lowered position and one or more lifted positions, in which the lifting apparatus comprises a frame, one or more elongated flexible members (belts) which at one end can be fastened to an external structure which is not part of the lifting apparatus and deviated by a first side member of said frame, one or more elongated flexible members (belts) which at one end can be fastened to an external structure which is not part of the lifting apparatus and deviated by a second side member of the frame opposite to the first one, at least a winding shaft about which said elongated flexible members winds causing said first and second elongated flexible members to slide with respect to said frame, and drive means for rotating said winding shaft.

### Background Art

In leisure vehicles such as campers, caravans, yachts or other leisure boats it is strongly felt the need of optimizing the vehicle's internal volumes so that different kind of furniture, among which there are beds and tables, are provided with shifting means for changing their position from a in-use configuration to a non-use configuration in which the space required by the furniture is minimum. The above shifting means are often lifting means which operate a vertical translation of the furniture.

For obtaining a vertical translation bed lifting apparatus with belts are known, which have many advantages compared to other types of lifting devices, in which the bed is supported by belts which are wound and unwound for lifting and lowering the bed respectively. Lifting apparatus with belts are very efficient and they have a vary tiny and light structure which is composed of low cost components. Bed lifting apparatus with belts are disclosed for instance in US 1,063,906 A (B. BENNETT), in US 5,984,404 A (FREIGHTLINER CORP [US]) 16.11.1999 , and in US 2007/0226901 (RBW IND INC) 04.10.2010. All the above documents describe devices in which the belts are deviated by pulleys and the means for letting the belts slide with respect to the frame are cylindrical members about which the belts are wound and unwound by manual or motor-driven winches.

In US 1,063,906 A (B. BENNETT) it is described a manually driven bed lifting device in which the winding shaft is operated by drive means comprising a gear wheel integral to the winding shaft coupled to a further gear wheel manually rotated by means of a handle bar. Upon rotating the handle bar for moving the bed to the desired height the reached position is kept by inserting a detachable pin among the teeth of the coupled gear wheels. Alternatively, the position can be kept by a tilting notch which is able to engage one of the gear wheels. The tilting notch allows a one way rotation of the gear wheel, that is the direction which moves the bed upwards. The described mechanism is simple but is also bulky and rudimentary and it is not safe in case of accidental operation of the mechanism.

In US 5,984,404 and in US 2007/0226901 bed lifting devices are described in which the belt winding shaft is driven by electric motors connected by proper transmission means. The desired position in height is kept only thanks to the electric motor which keeps the angular position of the winding shaft. Nevertheless, the electric motors need to be largely over-sized with respect to the power required for simply lifting the bed. In fact, while the lifting or lowering operation has to be performed with no load on the bed, differently the position in height has to be safely kept also when a full load is on the bed, that is with one or more people on it. In the above mentioned solutions, even if the electric motor is replaced by a winch it has to be correspondingly over-sized and provided with breaking means.

### Summary of invention

It is object of the present invention to provide a simple and reliable locking device for lifting apparatus, in particular lifting apparatus with belts for lifting furniture in leisure vehicles.

It is further object of the present invention to provide a lifting apparatus with belts comprising an improved locking device for preventing the rotation of the belt winding shaft.

According to an aspect of the present invention, the above objects are attained by means of a locking device for lifting apparatus, in particular for beds or other structures in leisure vehicles, in which said lifting apparatus comprises a frame, at least a first elongated flexible member having one end coupled to an external structure of said vehicle and deviated by a first side member of said frame, and at least a second elongated flexible member having one end coupled to an external structure of said vehicle and deviate by a second side member of said frame substantially parallel and opposite to side first side member, at least a winding shaft rotatably disposed on said frame about which said first and second elongated flexible members winds causing said first and second elongated flexible members to slide with respect to said frame, and drive means for rotating said winding shaft characterized in that said locking device comprises:
- at least one locking member slidably disposed on said winding shaft for sliding in an axial direction between a wind locking position and a release position;
- at least a locking member housing means integral to said frame for engaging said locking member in said wind locking position;
- release means for moving said locking member between said wind locking position and said release position.

When the locking device is in the wind locking position the rotation of the winding shaft is blocked by members which are integral to the frame of the lifting apparatus or the bed itself in a very reliable way. In addiction, the weight of the bed which acts for rotating the winding shaft do not cause the drive means to overwork.

Advantageously the winding shaft comprises at least a first shaft portion and a second shaft portion which are detachable for rapidly and easily assembling the locking device.

Still advantageously the release means comprises at least a release lever movable between a wind locking position and a release position and elastic means biasing said locking member towards said wind locking position.

### Brief description of drawings

These and more features of the invention will be more easily comprehensible from the following description of a preferred embodiment of the invention, given as a not limiting example, with reference to the accompanying drawings in which:
- Figure 1 shows a schematic top view of an embodiment of a lifting apparatus with belts comprising a locking device according to the invention;
- Figure 2 shows a broken section view taken along line II-II of fig. 1;
- Figure 3 shows a broken section view taken along line III-III of fig. 1 representing a locking device according to the invention comprised in a lifting apparatus with belts;
- Figure 4 shows a bottom view of the locking device of fig. 3;
- Figure 5 shows an exploded side view of the locking device of fig. 3;
- Figure 6 shows the locking device of fig. 3 in the release position.

### Description of embodiments

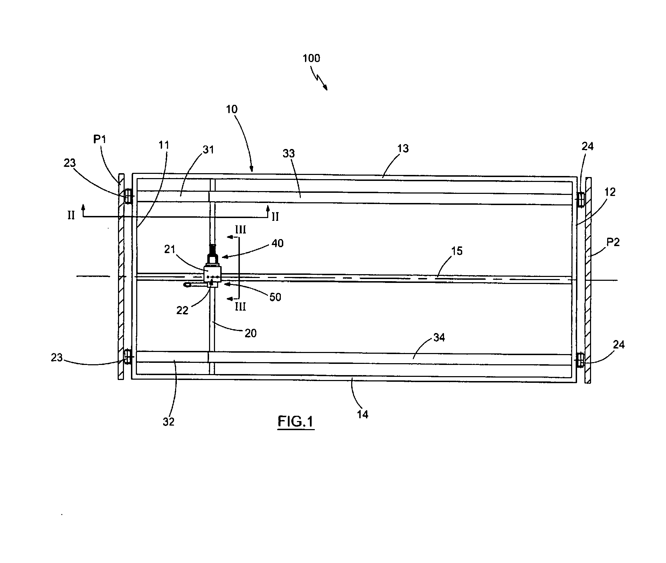

With reference to figures 1 to 3 it is shown a lifting apparatus with belts, 100, comprised between two vertical walls, P1 and P2. As shown in the top view of fig. 1, the lifting apparatus 100 comprises a frame, 10, which is able to support a furniture of a leisure vehicle which has to be lifted and lowered, or the frame 10 could be the frame of the furniture itself. The frame 10 is a substantially planar rectangular structure comprising a first cross side member, 11, a second cross side member, 12 opposite to the first one, two longitudinal side members, 13, 14, and a central longitudinal bar, 15.

A first winding shaft, 20, is rotatably supported at its ends by the longitudinal side members 13 and 14, and it also rotatably supported in a central portion by the central bar 15 through a connecting plate, 21, integral to the central bar 15 to which it is firmly bound by screw means, 22.

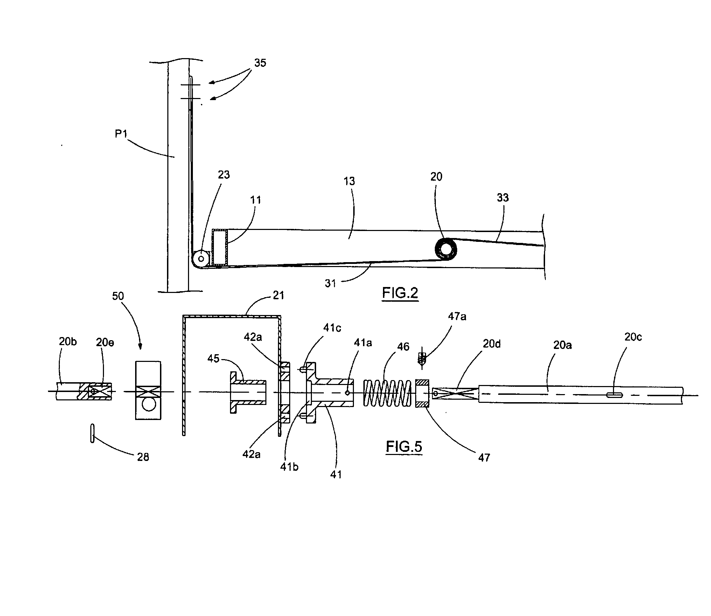

First elongated flexible members, 31, 32, and second elongated flexible members, 33, 34, are bound, at one of their ends, to the vertical wall P1 respectively P2 and, at the other ends, to the winding shaft. The path of the elongated flexible members 31 and 32 and the way they are bound can be seen in detail in the section view of figure 2. The elongated flexible member 31 is bound at one end to the winding shaft, then it is deviated by the first side member of the frame 11 passing through a deflecting roller, 23, and then it goes upwards and it is bound at its end to the vertical wall P1 by rivets, 35. The second elongated flexible member 33 is bound at one end to the winding shaft 20 together with the first elongated flexible member 31 so that the two elongated flexible member winds about the winding shaft 20 overlapped one on the other. The elongated flexible member 33 is then deviated by the deflecting roller 24 integral to the side member 12 and it is bound at its end to the wall P2.

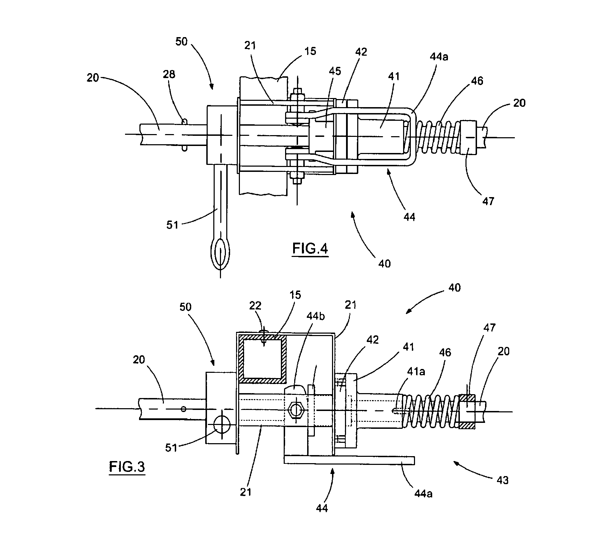

With reference to figures 3 and 4, at the connecting plate 21 on the drive shaft 20 are mounted drive means, 50, for rotating the winding shaft and a locking device, 40, for blocking the rotation of the winding shaft 20 itself. The drive means 50 are advantageously a manually driven winch of small size and little carrying capacity as it only has to lift the bed when there are no further loads on it. The drive means 50 are bound to the connecting plate 21 and mounted to the winding shaft 20 so that by rotating the handle bar, 51, the rotary motion is transmitted to the winding shaft 20. Obviously, the drive means 50 for rotating the winding shaft 20 could also be of a different type, for instance motor driven means, and in any case they can be smaller and of lower carrying capacity with regard to the drive means of lifting devices of the background art.

A locking device 40 according to the present invention is mounted to the winding shaft 20 at the opposite side of the connecting plate 21 with respect to the drive means 50. The locking device 40 comprises a locking member, 41, coupled to the winding shaft 20 for axially sliding, while a mutual rotation of the two elements is prevented.

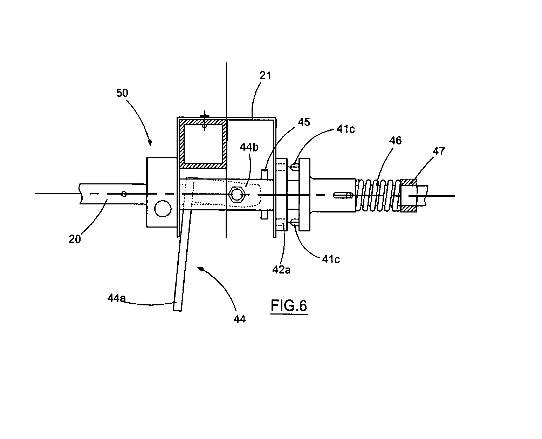

Locking member housing means, 42, are bound to an external side of the connecting plate 21 and they are adapted for engaging the locking member 41 in order to prevent its rotation. Release means, 43, for causing the locking member 41 to slide from the wind locking position shown in figures 3 and 4 to the release position shown in figure 6, comprises a release lever, 44, pivotably bound to the connecting plate 21, a sleeve member, 45 coaxial to the winding shaft 20 and which is interposed between the release lever 44 and the locking member 41, and elastic means, 46 acting between the locking member 41 and a protruding ring, 47, integral to the winding shaft 20 for biasing the locking member 41 towards the wind locking position.

In the exploded view of figure 5 it can be clearly seen the way the various component of the locking system are mounted on the winding shaft 20. The winding shaft 20 is composed of a first portion, 20a, and a second portion, 20b. In the first portion are mounted the protruding ring 47, which is secured to the winding shaft for instance by a threaded pin 47a, the elastic means 46 and the locking member 41. A pin, 41 a, integral to the locking member 41 engages a longitudinal slot, 20c, of the winding shaft 20 for preventing the mutual rotation of the two components. The first portion 20a of the winding shaft is then inserted in the connecting plate 21 where is bound the locking member housing means 42 to which is coupled the axially sliding sleeve member 45. The locking member 41 is provided with an internal shoulder, 41 b, for abutting against the sleeve member 45, and axially extending pins, 41 c, for engaging corresponding holes, 42a, of the locking member housing means 42. At the opposite external side of the connecting plate 21 the drive means 50 and the second portion 20b are inserted in the first portion 20a of the winding shaft 20. In the embodiment represented in figures the transmission of the rotary movement from the drive means 50 to the winding shaft is obtained by providing a rectangular profile of an end part of the first portion 20a which engages a corresponding rectangular profile of the drive means 50 and a end part 20e of the second portion 20b of the winding shaft. A pin 28, prevents the mutual axial movement of the first portion 20a and the second portion 20b of the winding shaft also preventing the axial movement of the drive means 50 and the locking device 40 from being disassembled.

The way the locking device 40 of the present invention works is simple and it can be easily understood from the attached figures. When the release lever 44 is in the wind locking position, represented in figure 3, the elastic means 46 keeps the locking member 31 engaged in the locking member housing means 42. In this configuration the rotation of the locking member 41 is prevented by the axially extending pins 41c which engage the corresponding holes 42a, and therefore also the rotation of the winding shaft 20 is prevented. When the release lever 44 is operated by tilting it of about 90° about its pivot axis (to the position of figure 6), the cam portion, 44b, of the release lever 44 presses the sleeve member 45 which slides causing also the locking member 41 to axially slide until it is disengaged from the locking member housing means 42. In the release position of figure 6 when the drive means 50 are operated the winding shaft rotates because the locking member 41 is free to rotate together with the winding shaft itself. When the release lever 44 is moved off the unstable equilibrium position of fig. 6 the elastic means 46 moves back the locking member to the wind locking position of fig. 3.

When the locking device of the present invention is in the wind locking position the winding shaft is prevented form rotating and the weight of the bed and any additional load which acts for rotating the winding shaft is completely supported by the locking device and it does not force the drive means 50 to rotate. When the release lever 44 is moved to the release position of fig. 6 this last configuration is kept thanks to the shape of the various components of the locking device and, until the release lever 44 is moved back towards the wind locking position, the drive means 50 are able to rotate the winding shaft 20.

The above features and advantages of the locking device for lifting apparatus with belts of the present invention remain unchanged also in case of changes or modifications.

The drive means 50 could be different from the above described types of drive means, and they could be manually as well as motor driven, specifically designed for being easily accessed and operated.

The frame 10 of the furniture to be lifted could have a very different shape and it could comprise further components of any kind.

The winding shaft 20, which in the described embodiment is rotatably connected to the frame 10 of the bed could also be rotatably connected to a different structure not integral to the furniture to be lifted.

The locking device 40, that in the described embodiment is mounted at a longitudinal middle section of the winding shaft 20, with the winding shaft composed of two detachable portions, could differently be mounted at one end of the winding shaft, for instance at the external surface of a longitudinal side member 13 or 14 which supports the winding shaft, so that the release lever 44 and the handle bar of the drive means 50 would be more easily accessible.

A still more advantageous solution could be provided in which the locking device 40 and the drive means could be preassembled on a portion of the winding shaft 20. In this case one or more additional portions of the winding shaft where are bound the first 31, 32 and second 33, 34 elongated flexible members could be provided for being coupled to the portion of the winding shaft where is mounted the locking device directly during the on-site installation of the lifting apparatus.

Finally, obviously the various components of the locking device could be replaced by functionally equivalent components.

These and more changes and modifications could be made to the locking device for lifting apparatus with belts of the present invention, still remaining within the ambit of protection defined by the following claims.

## Claims

1. Locking device (40) for lifting apparatus, in particular for beds or other structures in leisure vehicles, in which said apparatus comprises a frame (10), at least a first elongated flexible member (31, 32) having one end coupled to an external structure (P1) of said vehicle above said frame (10) and deviated by a first side member (11) of said frame (10), and at least a second elongated flexible member (33, 34) having one end coupled to an external structure (P2) of said vehicle above said frame (10) and deviated by a second side member (12) of said frame (10) substantially parallel and opposite to said first side member (11), at least a winding shaft (20) rotatably disposed on said frame (10) about which said first (31, 32) and second (33, 34) elongated flexible members winds causing said first and second elongated flexible members to slide with respect to said frame (10), and drive means (50) for rotating said winding shaft (20), **characterized in that** said locking devices (40) comprises: at least one locking member (41) slidably disposed on said winding shaft (20) for sliding in an axial direction between a wind locking position and a release position; at least a locking member housing means (42) integral to said frame (10) for engaging said locking member (41) in said wind locking position; and release means (43) for moving said locking member (41) between said wind locking position and said release position.

2. Locking device (10) according to claim 1 **characterized in that** said winding shaft comprises at least a first shaft portion (20a) and a second shaft portion (20b) which can be made integral.

3. Locking device (10) according to claim 1 or 2 **characterized in that** said release means comprises at least a release lever (44) movable between a wind locking position and a release position and elastic means (46) biasing said locking member (41) towards said wind locking position.

4. Shifting apparatus (100), in particular for beds or other structures in leisure vehicles, comprising a frame (10), at least a first elongated flexible member (31, 32) having one end coupled to an external structure (P1) of said vehicle above said frame (10) and deviated by a first side member (11) of said frame (10), and at least a second elongated flexible member (33, 34) having one end coupled to an external structure (P2) of said vehicle above said frame (10) and deviated by a second side member (12) of said frame (10) substantially parallel and opposite to said first side member (11), at least a winding shaft (20) rotatably disposed on said frame (10) about which said first (31, 32) and second (33, 34) elongated flexible members winds causing said first and second elongated flexible members to slide with respect to said frame (10), and drive means (50) for rotating said winding shaft (20), **characterized in that** it comprises a locking device (40) for locking the rotation of said winding shaft (20) comprising: at least one locking member (41) slidably disposed on said winding shaft (20) for sliding in an axial direction between a wind locking position and a release position; at least a locking member housing means (42) integral to said frame (10) for engaging said locking member (41) in said wind locking position; and release means (43) for moving said locking member (41) between said wind locking position and said release position.

5. Shifting apparatus (100) according to the previous claim **characterized in that** it comprises at least two first elongated flexible members (31, 33) and at least two second elongated flexible members (33, 34).

## Patentansprüche

1. Verriegelungsvorrichtung (40) für Hebezeuge, insbesondere für Betten oder andere Freizeitfahrzeugstrukturen, wobei das vorgesagte Hebezeug einen Rahmen (10), mindestens ein erstes verlängertes flexibles Element (31, 32) mit einem an eine Außenstruktur (P1) gekoppelten Ende des gesagten Fahrzeugs über dem oben genannten Rahmen (10) und von einem ersten Seitenelement (11) des gesagten Rahmens (10) abgewichen und mindestens ein zweites verlängertes flexibles Element (33, 34) mit einem an eine Außenstruktur (P2) gekoppelten Ende des gesagten Fahrzeugs über dem oben genannten Rahmen (10) und von einem zweiten Seitenelement (12) des gesagten Rahmens (10) im wesentlichen parallel und in entgegengesetzter Richtung zum ersten Seitenelement (11) abgewichen, mindestens eine über dem gesagten Rahmen (10) drehbar angeordnete Wickelwelle (20), auf der die gesagten ersten (31, 32) und zweiten (33, 34) verlängerten flexiblen Elements wickeln sie auf, so daß die ersten und zweiten verlängerten flexiblen Elements gegenüber dem gesagten Rahmen (10) gleiten, und Antriebselemente (50) zur Rotation der gesagten Wickelwelle (20) enthalt, **dadurch gekennzeichnet, daß** die erwähnte Verriegelungsvorrichtung (40) aus mindestens einem verschiebbar angeordneten Verriegelungselement (41) über der genannten Wickelwelle (20) zum Gleiten in einer axialen Richtung zwischen der Drehverriegelungs- und Freigabestellung, aus mindestens einem Gehäuse (42) des Verriegelungselements als Bestandteil des genannten Rahmens (10) zum Eingriff des erwähnten Verriegelungselements (41) in die gesagte Drehverriegelungsstellung; und aus Freigabemitteln (43) zur Bewegung des gesagten Verriegelungseiements (41) zwischen dor Drehverriegelungs- und Freigabestellung besteht.

2. Verriegelungsvorrichtung (10) nach Anspruch 1, **dadurch gekennzeichnet, daß** die gesagte Wickelwelle aus mindestens einem ersten Wellenteil (20a) und einem zweiten Wellenteil (20b) als Bestandteil besteht.

3. Verriegelungsvorrichtung (10) nach Anspruch 1 oder 2, **dadurch gekennzeichnet, daß** die Freigabemittel aus mindestens einem zwischen der Drehverriegelungs- und Freigabestellung beweglichen Freigabehabel (44) und aus elastischen Mitteln (46) zur Vorspannung des gesagten Verriegelungselements (41) in Richtung der erwähnten Drehverriegelungsstellung bestehen.

4. Schaltvorrichtung (100), insbesondere für Betten oder andere Freizeitfahrzeugstrukturen, bestehend aus einem Rahmen (10), aus mindestens einem ersten verlängerten flexiblen Element (31, 32) mit einem an eine Außenstruktur (P1) des genannten Fahrzeugs, über dem gesagten Rahmen (10) gekoppelten Ende und von einem ersten Seitenelement (11) des gesagten Rahmens (10) abgewichen aus mindestens einem zweiten verlängerten flexiblen Element (33, 34) mit einem an eine Außenstruktur (P2) des genannten Fahrzeugs, über dem gesagten Rahmen (10) gekoppelten Ende und von einem im wesentlichen parallel und in entgegengesetzter Richtung zum ersten Seitenelement (11) zweiten Seitenelement (12) des gesagten Rahmens (10) abgewichen, aus mindestens einer über dem gesagten Rahmen (10) drehbar angeordneten Wickelwelle (20), auf der die gesagten ersten (31, 32) und zweiten (33, 34) verlängerten flexiblen Elements wickeln sie auf, so daß die ersten und zweiten verlängerten flexiblen Elements gegenüber dem gesagten Rahmen (10) gleiten, und aus Antriebselementen (50) zur Rotation der gesagten Wickelwelle (20), **dadurch gekennzeichnet, daß** sie aus einer genannten Verriegelungsvorrichtung (40) zur Drehverriegelung der genannten Wickelwelle (20) mit aus mindestens einem verschiebbar über der genannten Wickelwelle (20) angeordneten Vorriegelungselement (41) zum Gleiten in einer axialen Richtung zwischen der Drehverriegelungs- und Freigabestellung, aus mindestens einem Gehäuse (42) des Verriegelungselements als Bestandteil des genannten Rahmens (10) zum Eingriff des erwähnten Verriegelungselements (41) in die gesagte Drehverriegelungsstellung, und aus Freigabemitteln (43) zur Bewegung des gesagten Verriegelungselements (41) zwischen der gesagten Drehverriegelungs- und Freigabestellung besteht.

5. Schaltvorrichtung (100), nach dem vorigen Anspruch, **dadurch gekennzeichnet, daß** sie aus mindestens zwei ersten verlängerten flexiblen Elementen (31, 33) und mindestens zwei zweiten verlängerten flexiblen Elementen (33, 34) besteht.

## Revendications

1. Dispositif de verrouillage (40) pour appareils de levage, en particulier pour des lits ou d'autres structures de véhicules de loisirs, dans lesquels ledit appareil comprend un châssis (10), au moins un premier élément flexible allongé (31, 32) ayant une extrémité couplée à une structure externe (P1) dudit véhicule au-dessus dudit châssis (10) et déviée par un premier élément latéral (11) dudit châssis (10), au moins un deuxième élément flexible allongé (33, 34) ayant une extrémité couplée à une structure externe (P2) dudit véhicule au-dessus dudit châssis (10) et déviée par un deuxième élément latéral (12) dudit châssis (10), considérablement parallèle et opposé au dit premier élément latéral (11), au moins un arbre d'enroulement (20) disposé de manière rotative sur ledit châssis (10), autour duquel lesdits premier (31, 32) et deuxième éléments flexibles allongés (33, 34) s'enroulent permettent aux dits premier et deuxième éléments flexibles allongés de glisser par rapport audit châssis (10), et des moyens d'entrainement (50) pour faire tourner ledit arbre d'enroulement (20), **caractérisé en ce que** ledit dispositif de verrouillage (40) comprend au moins un élément de verrouillage (41) disposé de manière coulissante sur ledit arbre d'enroulement (20) pour glisser dans une direction axiale entre une position de verrouillage et une position de déverrouillage de la rotation; au moins une boite de logement (42) d'un élément de verrouillage qui est partie intégrante dudit châssis (10) pour engager ledit élément de verrouillage (41) dans ladite position de verrouillage de l'enroulement; et des moyens de déverrouillage (43) pour déplacer ledit élément de verrouillage (41) entre ladite position de verrouillage de l'enroulement et la position de déverrouillage de l'enroulement.

2. Dispositif de verrouillage (90) selon la revendication 1, **caractérisé en ce que** ledit arbre d'enroulement comprend au moins une première partie de l'arbre (20a) et une deuxième partie de l'arbre (20b) comme partie intégrante.

3. Dispositif de verrouillage (10) selon la revendication 1 ou 2, **caractérisé en ce que** ledit moyen de déverrouillage comprend au moins un levier de déverrouillage (44) mobile entre une position de verrouillage et une position de déverrouillage de l'enroulement et une position de déverrouillage de l'enroulement, et des moyens élastiques (46) pour la mise en précontrainte dudit élément de verrouillage (41) envers la dite position de verrouillage de l'enroulement

4. Dispositif de déplacement (100), en particulier pour des lits ou d'autres structures de véhicules de loisirs, comprenant un châssis (10), au moins un premier élément flexible allongé (31, 32) ayant une extrémité couplée à une structure externe (P1) dudit véhicule au-dessus dudit châssis (10) et déviée par un premier élément latéral (11) dudit châssis (10), au moins un deuxième élément flexible allongé (33, 34) ayant une extrémité couplée à une structure externe (P2) dudit véhicule au-dessus dudit châssis (10) et déviée par un deuxième élément latéral (12) dudit châssis (10), considérablement parallèle et opposé au dit premier élément latéral (11), au moins un arbre d'enroulement (20) disposé de manière rotative sur ledit châssis (10), autour duquel lesdits premier (31, 32) et deuxième éléments flexibles allongés (33, 34) s'enroulent permettent aux dits premier et deuxième éléments flexibles allongés de glisser par rapport audit châssis (10), et des moyens d'entraînement (50) pour faire tourner ledit arbre d'enroulement (20), **caractérisé en ce qu'**il comprend un dispositif de verrouillage (40) pour verrouiller la rotation dudit arbre d'enroulement (20) comprenant au moins un élément de verrouillage (41) disposé de manière coulissante sur ledit arbre d'enroulement (20) pour glisser dans une direction axiale entre une position de verrouillage et une position de déverrouillage de l'enroulement, au moins une boîte de logement (42) d'un élément de verrouillage qui est partie intégrante dudit châssis (10) pour engager ledit élément de verrouillage (41) dans ladite position de verrouillage de l'enroulement; et des moyens de déverrouillage (43) pour déplacer ledit élément de verrouillage (41) entre ladite position de verrouillage de l'enroulement et la position de déverrouillage de l'enroulement.

5. Dispositif de déplacement (100), selon la revendication précédente **caractérisé en ce qu'**il comprend au moins deux premiers éléments allongés flexibles (31, 33) et au moins deux deuxièmes éléments allongés flexible (33, 34).
